# EUROPEAN PATENT APPLICATION

(11) **EP 4 826 130 A1**
(43) Date of publication of application: **21.10.2026**
(21) Application number: 24904459.5
(22) Date of filing: 16.12.2024
(51) Int. Cl.: C25B 1/042, C25B 9/19, C25B 13/07, C25B 13/08, C25B 9/23, C25B 9/65, C10B 39/02, F22B 1/18

(54) **HYDROGEN PRODUCTION SYSTEM AND HYDROGEN PRODUCTION METHOD**

(30) Priority: 14.12.2023 KR 20230182483
(71) Applicant: POSCO Holdings Inc., Pohang-si, Gyeongsangbuk-do 37859 (KR)
(72) Inventor: JOO, Sang-Wook, Pohang-si, Gyeongsangbuk-do 37877 (KR); PARK, Hai-Woong, Pohang-si, Gyeongsangbuk-do 37877 (KR); RHEE, Chang-Houn, Pohang-si, Gyeongsangbuk-do 37877 (KR); AHN, Jin-Soo, Pohang-si, Gyeongsangbuk-do 37877 (KR); YANG, Ye-Jin, Pohang-si, Gyeongsangbuk-do 37877 (KR)
(74) Representative: Pfenning, Meinig & Partner mbB
(86) International application number: PCT/KR2024/097004
(87) International publication number: WO 2025/127896

(57) **Abstract**

According to exemplary embodiments of the present invention, a hydrogen production system is provided. The hydrogen production system comprises: a dry quenching facility configured to cool coke using a cooling gas; a boiler configured to receive the cooling gas from the dry quenching facility and recover heat energy of the cooling gas to produce first steam and electric power; and a water electrolysis facility configured to receive the electric power from the boiler and electrolyze second steam to produce hydrogen. According to other exemplary embodiments of the present invention, a method for producing hydrogen is provided.

## Description

### Technical Field

The present disclosure relates to a hydrogen production system.

More particularly, the present disclosure relates to a hydrogen production system linked to a steel mill.

### Background Art

Recently, with the growing interest in global warming, research into technologies capable of reducing CO₂ emissions has been continuously conducted. In particular, hydrogen is attracting increasing attention as a material for stable energy storage in large-scale and long-term applications.

Hydrogen may be produced by decomposing hydrogencontaining raw materials, such as through the electrolysis of water or the thermal decomposition of ammonia. However, since the electrolysis of water requires a large amount of electrical energy, there has been a problem in that the overall energy efficiency of hydrogen production systems is reduced.

From the above, it is necessary to conduct research on a hydrogen production system capable of independently generating electricity for hydrogen production.

(Patent Document 1) Japanese Patent Laid-Open Publication No. 2006-307290

### Summary of Invention

### Technical Problem

An aspect of the present disclosure is to provide a hydrogen production system and a hydrogen production method capable of independently supplying power.

The subject of the present disclosure is not limited to the above. Those skilled in the art to which the present disclosure pertains will have no difficulty in understanding the additional objects of the present disclosure from the contents throughout the present specification.

### Solution to Problem

According to an aspect of the present disclosure, a hydrogen production system is provided. The hydrogen production system includes: a dry quenching facility cooling coke using a cooling gas; a boiler receiving the cooling gas from the dry quenching facility and recovering heat energy of the cooling gas to produce first steam and electrical power; and a water electrolysis facility receiving the electrical power from the boiler and electrolyzing second steam to produce hydrogen.

The hydrogen production system may circulate the cooling gas, from which the heat energy is recovered in the boiler, to the dry quenching facility.

A temperature of the cooling gas supplied to the boiler may be 900°C or higher, and the temperature of the cooling gas circulating to the dry quenching facility may be 200°C or lower.

The first steam may not be supplied to the water electrolysis facility.

The dry quenching facility may include: a cooling chamber cooling the coke; and a pre-chamber continuously coupled to the cooling chamber in an upper portion of the cooling chamber, and the boiler may be fluidly connected to the pre-chamber.

The water electrolysis facility may include a water electrolysis unit cell, the water electrolysis unit cell may include an anode receiving the second steam, a cathode generating a product gas including hydrogen or oxygen, and an electrolyte disposed between the anode and the cathode, and the electrolyte may include any one of a solid ceramic electrolyte, a polymer electrolyte membrane, an anion exchange membrane, and a combination thereof.

The boiler may produce 10 MW or more of electrical power based on the supply amount (ton/hr) of 80 ton/hr of coke fed into the dry quenching facility.

According to another aspect of the present disclosure, a hydrogen production method is provided. The hydrogen production method, which is linked to a steelmaking process, includes: providing electrical power produced in a boiler to a water electrolysis facility using high-temperature cooling gas obtained by dry cooling coke; and supplying second steam to the water electrolysis facility to produce hydrogen from the second steam.

The electrical power and the first steam are produced in the boiler using the high-temperature cooling gas, and the first steam may not be supplied to the water electrolysis facility.

The coke may be cooled using the cooling gas in a dry quenching facility fluidly connected to the boiler.

The boiler may produce 10 MW or more of electrical power based on the supply amount (ton/hr) of 80 ton/hr of the coke fed into the dry quenching facility.

### Advantageous Effects of Invention

According to an aspect of the present disclosure, it is possible to provide a hydrogen production system and a hydrogen production method capable of independently receiving electrical power.

Various and beneficial advantages and effects in the present disclosure are not limited to the above description, and may be more easily understood in the course of describing the specific example embodiments in the present disclosure.

### Brief Description of Drawings

FIG. 1 is a diagram illustrating a hydrogen production system according to example embodiments.
FIG. 2 is a diagram illustrating a dry quenching facility.
FIG. 3 is a diagram illustrating a boiler.
FIG. 4 is a diagram illustrating a water electrolysis unit cell.

### Mode for Invention

Hereinafter, preferred embodiments of the present disclosure will be described in detail with reference to the accompanying drawings. The terms and words used in the present specification and claims should not be interpreted as being limited to typical meanings or dictionary definitions, but should be interpreted as having meanings and concepts relevant to the technical scope of the present disclosure based on the rule that an inventor can appropriately define the concept of the term to most appropriately describe the best method for carrying out the present disclosure.

Hereinafter, when describing with reference to the drawings, the same or corresponding components will be denoted by the same reference numerals, and redundant descriptions thereof will be omitted.

In the following example embodiments, the terms "first," "second," and the like are not used in a limiting sense, but are used for the purpose of distinguishing one component from another component.

In the following example embodiments, singular forms include plural forms unless interpreted otherwise in context.

In the following example embodiments, the terms "include", "comprise", "have" or the like mean that a feature or element described in the specification is present, and do not preclude in advance the possibility that one or more other features or components may be added.

Sizes of components may be exaggerated or reduced in the accompanying drawings for convenience of description. For example, the size and thickness of each component illustrated in the drawings are arbitrarily indicated for convenience of description, and the present disclosure is not necessarily limited to the illustrated those.

In a case where certain embodiments can be otherwise implemented, the order of specific processes may be performed different from the order in which the processes are described. For example, two steps described in succession may be performed substantially simultaneously, or may be performed in an order opposite to the order described.

Further, in describing example embodiments of the present disclosure, well-known functions or constructions will not be described in detail since they may unnecessarily obscure the understanding of the present disclosure.

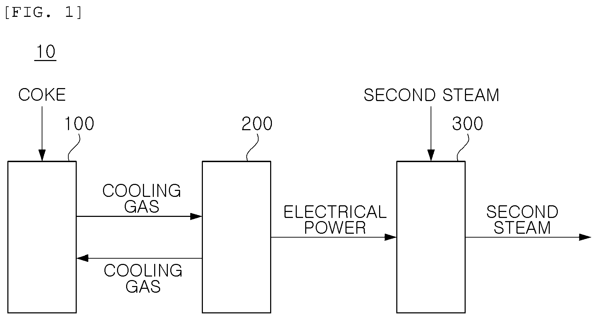

FIG. 1 is a diagram illustrating a hydrogen production system 10 according to example embodiments.

Referring to FIG. 1, the hydrogen production system 10 according to example embodiments includes a dry quenching facility 100, a boiler 200, and a water electrolysis facility 300.

The dry quenching facility 100 may cool coke using a cooling gas. Thus, according to example embodiments, a hydrogen production system linked to a steelmaking process may be provided.

Generally, blast furnace coke used in a steelmaking process is produced by feeding blended coal into a coke oven, carbonizing the blended coal at a temperature of 1,000°C or higher for about 20 hours, and then discharging and cooling the high-temperature red-hot coke. The produced coke is fed into a blast furnace along with sintered ore and used as a heat source and reducing agent to produce pig iron. In such a coke manufacturing process, the high-temperature red-hot coke discharged after carbonization has a temperature of over 1,000°C, and wet or dry cooling methods are used to cool the red-hot coke.

In the case of the wet cooling method, not only is it difficult to recover the sensible heat of the high temperature, but environmental problems such as the generation of large amounts of wastewater and dust may also occur. However, according to example embodiments, the above-described problems may be prevented by using the dry cooling method.

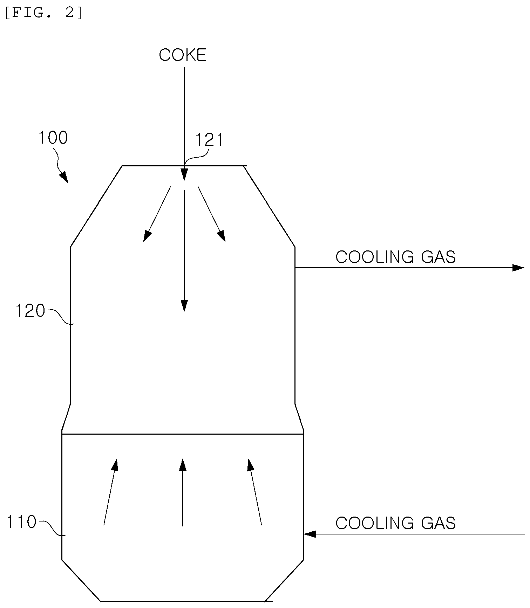

FIG. 2 is a diagram illustrating a dry quenching facility 100.

Referring to FIG. 2, the dry quenching facility 100 may include a cooling chamber 110 and a pre-chamber 120.

The cooling chamber 110 may be located in a lower portion of the dry quenching facility 100. Coke may be supplied from an upper portion of the dry quenching facility 100 and flow toward the cooling chamber 110.

The cooling chamber 110 may cool the coke supplied to the dry quenching facility 100. To this end, the cooling chamber 110 may receive a cooling gas supplied from the outside. More specifically, the cooling gas supplied to the lower portion of the cooling chamber 110 may come into contact with the coke in a counter-flow direction. This improves the contact efficiency with the coke, thereby allowing the coke to be cooled effectively.

The coke flowing into the cooling chamber 110 may contain heat energy corresponding to a temperature of about 1000°C or higher. These high-temperature cokes may be cooled to about 150°C or lower by exchanging heat through contact with the cooling gas flowing from the lower portion to the upper portion of the cooling chamber 110. As a result, the cooling gas may be heated to a temperature of about 900°C or higher. The heated cooling gas may be collected in the pre-chamber 120.

The cooling gas may contain an inert gas. More specifically, the cooling gas may be an inert gas containing 70 to 75 vol% of nitrogen (N₂).

The coke cooled in the cooling chamber 110 may be discharged to the lower portion of the cooling chamber 110.

The pre-chamber 120 may be connected to the cooling chamber 110 in series in the upper portion of the cooling chamber 110. The coke may be supplied to the upper portion of the pre-chamber 120. More specifically, the red-hot coke, after completion of carbonization, may be loaded into the pre-chamber 120 by a crane (not illustrated) in a bucket (not illustrated) mounted on a transport trolley (not illustrated). The red-hot coke may be loaded into the pre-chamber 120 by dropping through an inlet 121 provided at the upper portion of the pre-chamber 120. Thereafter, the coke may flow into the cooling chamber 110 and be cooled by the cooling gas. The cooling gas that cools the coke may rise toward the pre-chamber 120 and flow to the upper portion of the dry quenching facility 100.

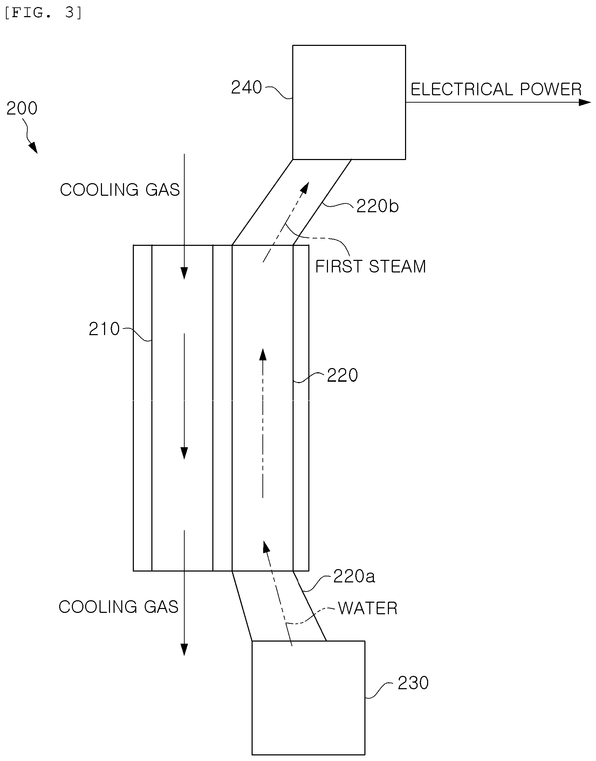

FIG. 3 is a diagram illustrating a boiler 200.

Referring to FIG. 3, the boiler 200 may receive cooling gas from the dry quenching facility 100. To this end, the boiler 200 may be connected to the dry quenching facility 100 through a fluid connection such as an air duct (not illustrated). More specifically, the boiler 200 may be connected to the pre-chamber 120. As a result, the boiler 200 may receive cooling gas containing high-temperature heat energy after heat exchange with coke.

According to example embodiments, the boiler 200 may recover the heat energy of the cooling gas to produce first steam and electrical power. More specifically, the boiler 200 may include a cooling gas pipe 210 allowing the cooling gas to flow, a heat exchange pipe 220 disposed adjacent to the cooling gas pipe, a water tank 230 providing water to the heat exchange pipe 220, and a generator 240 receiving a first steam from the heat exchange pipe 220 and operating a turbine to produce electrical power.

The cooling gas pipe 210 may be fluidly connected to the dry quenching facility 100. More specifically, the cooling gas pipe 210 may be fluidly connected to the pre-chamber 120. To this end, the cooling gas pipe 210 may be connected to the dry quenching facility 100 through fluid connection such as an air duct.

According to example embodiments, the cooling gas from which heat energy has been recovered in the boiler 200 may be circulated to the dry quenching facility 100. More specifically, the cooling gas from which heat energy has been recovered in the boiler 200 may be circulated to the cooling chamber 110. In this way, the cooling gas may be circulated within the hydrogen production system 10, thereby improving the dry quenching efficiency of the coke.

According to example embodiments, the boiler 200 may produce more than 10 MW of electrical power based on a supply amount (ton/hr) of 80 ton/hr of coke supplied to the dry quenching facility 100. As the supply amount of coke supplied to the dry quenching facility 100 increases, the amount of the cooling gas that exchanges heat with the coke in the cooling chamber 110 may increase. By increasing the amount of cooling gas containing the high-temperature heat energy, the amount of first steam produced through heat exchange with the cooling gas in the boiler 200 may increase. As the amount of the first steam increases, it may provide higher power to the turbine of the generator 240, thereby enabling the generator 240 to produce higher electrical power.

The heat exchange pipe 220 may be positioned adjacent to the cooling gas pipe 210 so as to exchange heat with the cooling gas pipe 210. More specifically, the heat exchange pipe 220 may be partially or fully in contact with the cooling gas pipe 210.

One end portion 220a of the heat exchange pipe 220 may be connected to the water tank 230, and the other end portion 220b, opposite to the one end 220a, may be connected to the generator 240. Water may flow through the one end portion 220a of the heat exchange pipe 220. The water may flow to the other end portion 220b and be provided as the first steam through heat exchange with the cooling gas. The first steam may be supplied to the generator 240 through the other end portion 220b of the heat exchange pipe 220.

The fluid (water and the first steam) within the heat exchange pipe 220 may flow in parallel, counter-current, and combinations thereof with respect to the flow direction of the cooling gas within the cooling gas pipe 210.

According to example embodiments, the temperature of the cooling gas supplied to the boiler 200 may be about 900°C or higher. The temperature of the cooling gas circulating to the dry quenching facility 100 may be about 200°C or lower. The maximum production volume of the first steam may be determined by the heat energy resulting from the difference between the supply temperature and the circulation temperature of the cooling gas. That is, the larger the difference between the temperature of the cooling gas supplied to the boiler 200 and the temperature of the cooling gas circulating to the dry quenching facility 100, the greater the production volume of the first steam.

As a non-limiting example, the difference between the supply temperature and the circulation temperature of the cooling gas may be determined by any one of the heat exchange area of the cooling gas pipe 210 and the heat exchange pipe 220, the material of the cooling gas pipe 210 and the heat exchange pipe 220, the flow rate of the cooling gas within the cooling gas pipe 210, the flow rate of the water within the heat exchange pipe 220, and any combination thereof.

The generator 240 may be connected to the heat exchange pipe 220 to receive the first steam. The turbine included in the generator 240 rotates by the flow of the first steam, and the generator 240 may produce electrical power using the power of the turbine. The first steam that operates the turbine may be discharged outside the hydrogen production system 10. Alternatively, the first steam that operates the turbine may be circulated to the water storage tank 230. In this case, the first steam may be cooled during the transfer process to the water storage tank 230 and stored as water in the water storage tank 230.

The water electrolysis facility 300 may receive electrical power from the boiler 200 and electrolyzing second steam to produce hydrogen. In this way, since the hydrogen production system 10 may supply electrical power on its own, it may produce hydrogen efficiently.

The second steam may be distinct from the first steam produced in the boiler 200. As a more specific example, the first steam may not be supplied to the water electrolysis facility 300. The first steam may provide kinetic energy for the turbine of the generator 240 to rotate. When some of the generated first steam is branched out and supplied to the water electrolysis facility 300 and the remainder is supplied to the generator 240, the amount of first steam supplied to the generator 240 may decrease, thereby reducing the power generation efficiency of the generator 240. Alternatively, even if the generator 240 and the water electrolysis facility 300 are sequentially connected to drive the turbine and supply the first steam to the water electrolysis facility 300, the flow path of the first steam may become excessively long. As a result, facilities such as pipelines and pumps that transport the first steam to the water electrolysis facility 300 may be excessively extended, and excessive costs may be incurred for the maintenance and management of the hydrogen production system 10. Therefore, by producing hydrogen using a separate second steam distinct from the first steam, the power generation efficiency of the boiler 200 may be improved and the maintenance of the hydrogen production system 10 may be easily performed.

As a non-limiting example, hydrogen produced in the water electrolysis facility 300 may be supplied to the reduction process of pulverized iron ore in the steelmaking process. Conventionally, the coke was manufactured using coal, and this coke was used in the reduction process of pulverized iron ore. As a result, there was a problem of increased carbon dioxide emissions originating from the raw materials of the coke. However, according to example embodiments, since hydrogen may be used as a reducing agent for pulverized iron ore, the amount of carbon dioxide generated in the steelmaking process may be effectively reduced.

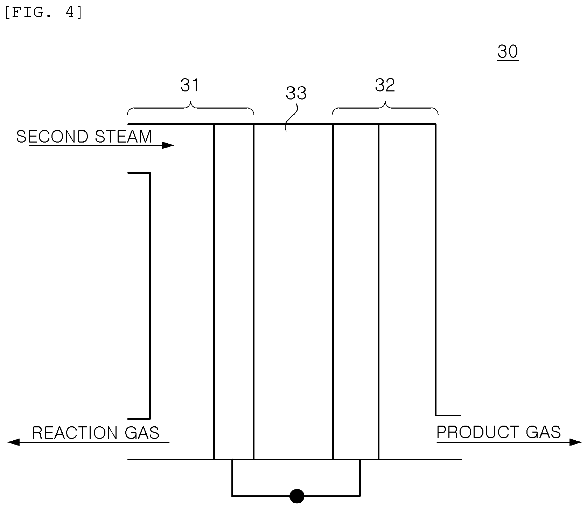

FIG. 4 is a diagram illustrating a water electrolysis unit cell 30.

Referring to FIG. 4, the water electrolysis facility 300 may include a water electrolysis unit cell 30. More specifically, the water electrolysis unit cell 30 may be provided in the form of a water electrolysis stack in which multiple units are stacked. Additionally, the water electrolysis facility 300 may further include a heater capable of heating the second steam to the operating temperature of the water electrolysis unit cell 30. In this case, the heater may be any one of an electric heater, a heat exchanger, and a combination thereof.

The water electrolysis unit cell 30 may produce electrical power by electrolyzing the water contained in the second steam. In this case, the reaction of electrolyzing water is an endothermic reaction, but the electrolyzing water may generate some heat due to an electrochemical irreversible reaction occurring in the second steam. The amount of heat consumed for the electrolysis of water in the water electrolysis unit cell 30 and the amount of heat generated by the electrochemical irreversible reaction may be determined by the operating voltage of the water electrolysis unit cell 30.

According to example embodiments, the operating voltage of the water electrolysis unit cell 30 may be set in a range such that the amount of heat generated by the electrochemical irreversible reaction of the water electrolysis unit cell 30 is greater than or equal to the amount of heat consumed by the endothermic reaction of the water electrolysis unit cell 30. That is, the operating voltage of the water electrolysis unit cell 30 may be greater than or equal to the so-called thermoneutral voltage, which is substantially equal to the amount of heat generated by the electrochemical irreversible reaction of the water electrolysis unit cell 30 and the amount of endothermic heat consumed by the endothermic reaction of the water electrolysis unit cell 30. As a result, the water electrolysis unit cell 30 may maintain the temperature required for the electrolytic reaction of water using its own heat energy.

The water electrolysis unit cell 30 may include an anode 31 that receives a second steam, a cathode 32 that generates a product gas containing hydrogen or oxygen, and an electrolyte 33 that is disposed between the anode 31 and the cathode 32.

The second steam may be provided to the anode 31. The water contained in the second steam may be electrolyzed at the anode 31. As a result, the reaction gas containing hydrogen or oxygen may be generated at the anode 31. The type of gas contained in the reaction gas may differ from that of the product gas. As one example, when the reaction gas contains oxygen, the product gas may contain hydrogen. As another example, when the reaction gas contains hydrogen, the product gas may contain oxygen.

According to a non-limiting example, the cathode 32 may be supplied with a carrier gas to effectively discharge the product gas. The carrier gas flows in one direction through the cathode 32 and may discharge the product gas generated in the cathode 32 to the outside of the water electrolysis unit cell 30. However, for convenience of illustration, FIG. 4 illustrates a case where no carrier gas is supplied. Therefore, a person skilled in the art may appropriately modify the design of the cathode of the water electrolysis unit cell to supply the carrier gas.

Depending on the type of electrolyte 33, the ion behavior within the water electrolysis unit cell 30 may differ. As one example, the water contained in the second steam at the anode 31 may be electrolyzed to produce oxygen gas and hydrogen ions (H⁺). These hydrogen ions may be supplied to the cathode 32 through the electrolyte 33 to produce a product gas containing hydrogen. As another example, the water contained in the second steam at the anode 31 may be electrolyzed to produce hydrogen gas and oxygen ions (O²⁻). These oxygen ions may be supplied to the cathode 32 through the electrolyte 33 to produce a product gas containing oxygen. As still another example, the water contained in the second steam at the anode 31 may be electrolyzed to produce hydroxide ions (OH-) and hydrogen gas. These hydroxide ions may be supplied to the cathode 32 through the electrolyte 33 to produce a product gas containing oxygen. In this way, hydrogen may be included in the product gas or the reaction gas discharged from the water electrolysis unit cell 30. The generated hydrogen may be separately collected and provided as a reducing agent to the steelmaking process.

As a non-limiting example, the electrolyte 33 may include any one of a solid ceramic electrolyte, a polymer electrolyte membrane, an anion exchange membrane, and a combination thereof.

### [Hydrogen Production Method]

A hydrogen production method according to example embodiments may include the step of providing electrical power produced in the steelmaking process to the water electrolysis facility, and the step of producing hydrogen by supplying the second steam to the water electrolysis facility.

The step of providing electrical power produced in the steelmaking process to the water electrolysis facility may be performed using a so-called coke dry quenching method, which cools the red-hot coke with an inert gas. More specifically, the red-hot coke may be cooled using a cooling gas in a dry quenching facility that is fluidly connected to a boiler and cools the red-hot coke by the coke dry quenching method. Subsequently, the first steam and electrical power may be produced in the boiler using high-temperature cooling gas that has been heat-exchanged with red-hot coke. The water electrolysis facility may be operated by supplying the electrical power produced in the boiler to the water electrolysis facility. The boiler may produce more than 10 MW of electrical power based on a supply amount (ton/hr) of 80 ton/hr of coke fed into the dry quenching facility. In this case, the first steam may not be supplied to the water electrolysis facility. Furthermore, details that overlap with the hydrogen production system 10 described above may be applied to the hydrogen production method as well, so a detailed description thereof is omitted.

The step of producing hydrogen by supplying the second steam to the water electrolysis facility may be performed by supplying the second steam, which is distinct from the first steam, to the water electrolysis facility and electrolyzing the second steam. In this way, the efficiency of the hydrogen production method may be further improved by producing hydrogen using an independent second steam rather than the first steam originating from the steelmaking process. Furthermore, details that overlap with the hydrogen production system 10 described above may be applied to the hydrogen production method as well, so a detailed description thereof is omitted.

While example embodiments have been shown and described above, it will be apparent to those skilled in the art that modifications and variations could be made without departing from the scope of the present disclosure as defined by the appended claims.

### (Description of Reference Characters)

| | | | |
|---|---|---|---|
| 10: | Hydrogen production system | 230: | Water storage tank |
| 100: | Dry quenching facility | 240: | Generator |
| 110: | Cooling chamber | 300: | Water electrolysis facility |
| 120: | Pre-chamber | 30: | Water electrolysis unit cell |
| 200: | Boiler | 31: | Anode |
| 210: | Cooling gas pipe | 32: | Cathode |
| 220: | Heat exchange pipe | 33: | Electrolyte |

## Claims

1. A hydrogen production system, comprising:
a dry quenching facility cooling coke using a cooling gas;
a boiler receiving the cooling gas from the dry quenching facility and recovering heat energy of the cooling gas to produce first steam and electrical power; and
a water electrolysis facility receiving the electrical power from the boiler and electrolyzing second steam to produce hydrogen.

2. The hydrogen production system of claim 1,
wherein the cooling gas, from which the heat energy is recovered in the boiler, is circulated to the dry quenching facility.

3. The hydrogen production system of claim 2,
wherein a temperature of the cooling gas supplied to the boiler is 900°C or higher, and
the temperature of the cooling gas circulating to the dry quenching facility is 200°C or lower.

4. The hydrogen production system of claim 1,
wherein the first steam is not supplied to the water electrolysis facility.

5. The hydrogen production system of claim 1,
wherein the dry quenching facility comprises:
a cooling chamber cooling the coke; and
a pre-chamber continuously coupled to the cooling chamber in an upper portion of the cooling chamber, and
the boiler is fluidly connected to the pre-chamber.

6. The hydrogen production system of claim 1,
wherein the water electrolysis facility comprises a water electrolysis unit cell,
the water electrolysis unit cell comprises an anode receiving the second steam, a cathode generating a product gas including hydrogen or oxygen, and an electrolyte disposed between the anode and the cathode, and
the electrolyte comprises any one of a solid ceramic electrolyte, a polymer electrolyte membrane, an anion exchange membrane, and a combination thereof.

7. The hydrogen production system of claim 1,
wherein the boiler produces 10 MW or more of electrical power based on a supply amount (ton/hr) of 80 ton/hr of coke fed into the dry quenching facility.

8. A hydrogen production method linked to a steelmaking process, comprising:
providing electrical power produced in a boiler to a water electrolysis facility using high-temperature cooling gas obtained by dry cooling coke; and
supplying second steam to the water electrolysis facility to produce hydrogen from the second steam.

9. The hydrogen production method of claim 8,
wherein the electrical power and the first steam are produced in the boiler using the high-temperature cooling gas, and
the first steam is not supplied to the water electrolysis facility.

10. The hydrogen production method of claim 8,
wherein the coke is cooled using the cooling gas in a dry quenching facility fluidly connected to the boiler.

11. The hydrogen production method of claim 10,
wherein the boiler produces 10 MW or more of electrical power based on a supply amount (ton/hr) of 80 ton/hr of coke fed into the dry quenching facility.
